# EUROPÄISCHE PATENTANMELDUNG

(11) **EP 0 846 860 A2**
(43) Veröffentlichungstag der Anmeldung: **10.06.1998**
(21) Anmeldenummer: 97120833.5
(22) Anmeldetag: 14.10.1993
(51) Int. Cl.: F04C 13/00

(54) **Verfahren und Stufe zur Behandlung einer Thermoplastschmelze mit einer Zahnradpumpe**

(30) Priorität: 28.10.1992 CH 3360/92; 19.04.1993 CH 1179/93
(62) Teilanmeldung aus: 93116600.3
(71) Anmelder: Maag Pump Systems Textron AG, 8023 Zürich (CH)
(72) Erfinder: Stehr, Roger, D-40599 Düsseldorf (DE)
(74) Vertreter: Troesch Scheidegger Werner AG

(57) **Zusammenfassung**

Es wird eine Behandlungsstufe für eine Thermoplastschmelze vorgeschlagen, welche einen auf Unterdruck gesetzten Entgasungsschacht (35) umfasst, eine ihm nachgeschaltete, aus dem Unterdruck arbeitende Zahnradpumpe (39), wobei die Zahnradpumpe aus einer Mehrstrangdüse gespiesen wird, um PVC oder thermoplastische Kunststoffabfälle variierender Zusammensetzung zu verarbeiten.

## Beschreibung

Es sind Extrudertypen bekannt, welche es bauartbedingt nicht erlauben, entlang der Extrusionseinheit eine Schmelze zu entgasen. Ein wesentlicher Vertreter dieses Extrudertyps ist der sog. "Planetwalzenextruder", wie er beispielsweise aus der DE-PS 31 33 647 bekannt ist. Eine Entgasung des Fördermediums kann bei diesen Extrudern erst nach Verlassen der Extrusionseinheit erfolgen.

Gebräuchliche Entgasungsextruder verfügen zwar über eine oder mehrere Entgasungsöffnungen im Zylinder, die Wirksamkeit der Schmelzeentgasung ist jedoch aufgrund der geringen erreichbaren Schmelzeoberfläche stark eingeschränkt.

Um der Forderung nach intensiver Schmelzeentgasung nachzukommen, sind zweistufige Extrusionssysteme in Kaskadenbauweise vorgeschlagen worden, wobei zwischen den Extrusionsstufen ein Entgasungsschacht zwischengeschaltet wurde, mit angeschlossener Vakuumpumpe.

Solche Kaskadensysteme weisen den Nachteil einer grossen verfahrenstechnischen Länge auf, welche einen entsprechend hohen Aufwand zur Wärmestabilisierung des Fördermediums erforderlich macht. Darüberhinaus erfordert eine grosse verfahrenstechnische Länge den entsprechenden Raumbedarf sowie grosse Mengen von Antriebs- und Heizenergie.

Aus der US- 3 817 668 ist es bekannt, vorwiegend niederviskose thermoplastische Polymerschmelzen aus einem bezüglich Umgebungsdruck auf Unterdruck gesetzten Behältnis, z.B. aus einer Reaktorbirne mittels einer Zahnradpumpe zu fördern.

Aufgrund konstruktiver Ausführung und begrenztem Einsatzspektrum (Viskosität) wurden bisher diese aus der Polymersynthese bekannten Pumpen in der Kunststoffextrusion kaum eingesetzt.

Im Rahmen des steigenden Umweltbewusstseins besteht nun einerseits mehr und mehr das Bedürfnis, Kunststoffabfälle (post consumer waste) wiederzuververten. Anderseits sollen auch mehr und mehr thermisch sensible Thermoplastschmelzen und dabei insbesondere PVC-Schmelzen verarbeitet werden. Auf die Verarbeitung von thermoplastischen Kunststoffabfallen (post consumer waste) und von PVC bezieht sich die vorliegende Erfindung.

Sie setzt sich zur Aufgabe, unter einem ersten Aspekt, ein Verfahren bzw. eine Behandlungsstufe letztgenannter Art so weiterzubilden, dass sie für thermoplastische Kunststoffabfälle oder für PVC einsetzbar ist.

Dies wird am Verfahren letztgenannter Art bei dessen Ausbildung nach dem kennzeichnenden Teil von Anspruch 1 erreicht, bei einer Behandlungsanlage genannter Art bei deren Ausbildung nach dem kennzeichnenden Teil von Anspruch 3.

Es hat sich nämlich gezeigt, dass für die erfindungsgemässe Verarbeitung, einerseits von thermoplastischen Kunststoffabfällen deren Zusammensetzung in sehr weitem Bereich variierbar ist, und welche unterschiedlich stark verschmutzt sein können, anderseits von PVC, die Speisung der vorgesehenen Zahnradpumpen mittels eines Stranges der Schmelze mit vorgegebener Geometrie, bevorzugterweise mit einem Mehrfachstrang erforderlich ist. Bei der Verarbeitung von PVC ist nur bei Gewährleistung einer konstanten vorgegebenen Stranggeometrie eine störungsfreie Förderung der Zahnradpumpe gegeben.

Bei den genannten Abfällen müssen Lösungsmittelanteile von Druckfarben und Restfeuchteanteile jeder Art abgeführt werden, um qualitativ brauchbare Sekundärprodukte zu erhalten.

Um somit eine möglichst grosse erreichbare Schmelzeoberfläche für die Entgasung auszunützen wird vorgeschlagen, dem Wortlaut von Anspruch 2 folgend, den erwähnten Strang bzw. vorzugsweise Mehrfachstrang vor der Entgasung zu bilden und ihn mithin durch den Entgasungsschacht dem Eingang der vorgesehenen Zahnradpumpe zuzuführen.

Zur intensiven Schmelzeentgasung ist eine, bezogen auf das Schmelzevolumen möglichst grosse Schmelzeoberfläche erforderlich.

Bei Vorgehen gemäss der vorliegenden Erfindung ist es für die erwähnten zu verarbeitenden Medien ohne weiteres möglich, verfahrenstechnische Lange verglichen mit Kaskadensystemen kurz zu halten und einem Extruder einen Entgasungsschacht und letzterem eine aus Unterdruck beschickbare Zahnradpumpe nachzuschalten.

Aus der CH-PS-573 053 sowie der US-PS 3 746 481 sind Zahnradpumpen bekannt, welche ausgelegt sind, um gegenüber Umgebungsdruck mit Unterdruck beschickt zu werden. Diese Pumpen erlauben mithin, auch bei Beschickung aus dem Unterdruck vollständig gefüllt betrieben zu werden und damit den für Zahnradpumpen typischen, konstanten Austragsdruck zu liefern. Allerdings sind diese Pumpen für das Fördern stark verschmutzter Thermoplastschmelzen, insbesondere aufgrund der Rotorwellendichtungen, üblicherweise mittels Gleitringdichtungen oder auch Stopfbuchspackungen, nicht geeignet.

Die vorliegende Erfindung setzt sich mithin unter einem weiteren Aspekt zum Ziel, eine Pumpe der letztgenannten Art, d.h. welche zum Fördern von hochviskosen Medien, wie von Kunststoffschmelzen generell, geeignet ist, und zwar gegenüber Umgebungsdruck aus Unterdruck, und die einen oberhalb der Zahnräder liegenden, sich gegen die Zahnräder hin verjüngenden Beschickungstrichter aufweist, so weiterzubilden, dass diese Pumpe zur Förderung der genannten verschmutzten Thermoplastschmelzen variierender Zusammensetzung einsetzbar wird, ebenso zur Förderung von PVC.

Dies wird durch ihre Ausbildung nach dem kennzeichnenden Teil von Anspruch 3 erzielt.

Zwar ist es aus der EP-A-0 189 670 bekannt, wie eine Zahnradpumpe zur Förderung thermisch sensibler Polymere, wie von PVC, zu gestalten ist, d.h. so, dass das Fördermedium das Schmiermedium für die Wellenlager bildet und Fliesswege für das Fördermedium axial entlang der Rotorwellen in die Umgebung vorgesehen sind. Die dort beschriebene Zahnradpumpe ist aber nicht in der Lage, aus dem Unterdruck zu fördern, also aus Druckverhältnissen, welche das Vortreiben des Fördermediums als Schmiermedium eher problematisch erscheinen lassen.

Es wird nun erfindungsgemäss erkannt, dass sich die aus der CH-PS-573 053 prinzipiell bekannte Zahnradpumpe, die üblicherweise zum Austragen dünn- bis mittelviskoser Medien aus einer unter Unterdruck stehenden Reaktorbirne eingesetzt wird, dann auch für das Fördern von stark verschmutzten Thermoplastschmelzen ohne weiteres eignet, wenn ihre Rotoren gemäss einer üblicherweise für den Einsatz zwischen Extruder und Extrusionswerkzeug eingesetzten Zahnradpumpe, nämlich gemäss der EP-A-0 189 670, gelagert werden, obwohl sie aus Unterdruck beschickt wird.

Bei einer bevorzugten Ausführungsform der erfindungsgemässen Behandlungsstufe wird die letzterwähnte, für sich erfindungsgemässe Zahnradpumpe, eingesetzt.

Bevorzugte Ausführungsvarianten der erwähnten Zahnradpumpe bzw. der erwähnten Behandlungsstufe sind in den Ansprüchen 6 bis 11 spezifiziert.

Die Erfindung wird anschliessend beispielsweise anhand von Figuren erläutert.

Es zeigen:
- Fig. 1: einen Längsschnitt durch eine erfindungsgemässe Zahnradpumpe;
- Fig. 2: einen Querschnitt durch die erfindungsgemässe Zahnradpumpe nach Fig. 1;
- Fig. 3: schematisch eine Anlage zur Herstellung einer Thermoplastschmelze mit erfindungsgemässer Behandlungsstufe;
- Fig. 4: ein erfindungsgemässes Extrusionssystem mit erfindungsgemässer Behandlungsstufe.

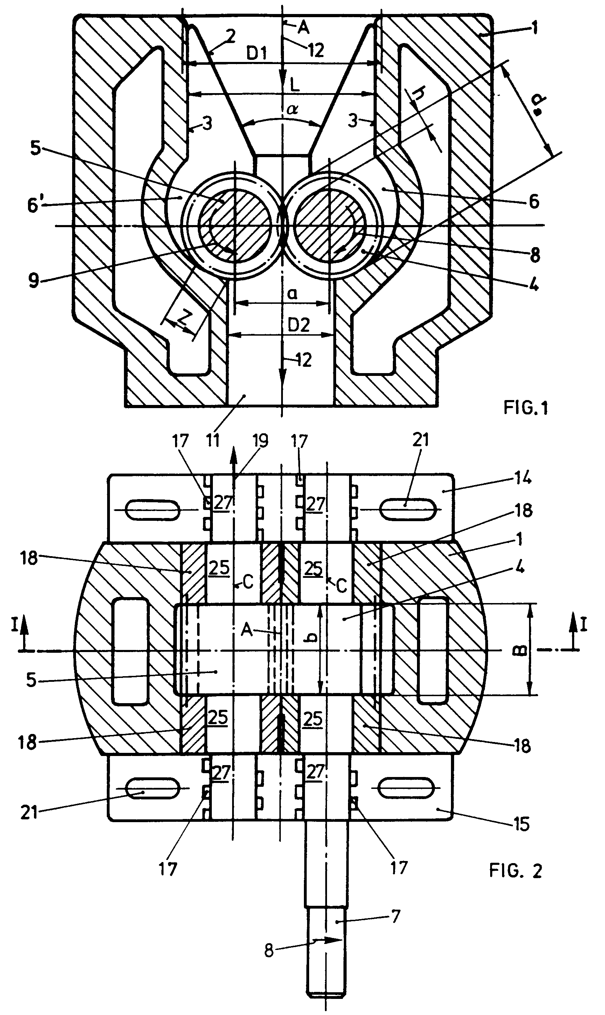

Gemäss Fig. 1 weist eine erfindungsgemässe Pumpe ein Gehäuse 1 auf, worin ein Beschickungstrichter 2 integriert ist, welcher oberhalb der Pumpenzahnräder 4 bzw. 5 liegt.

Bevorzugterweise weist der Beschickungstrichter 2 einen Kegelöffnungswinkel α zwischen 36° und 60° auf. Eingearbeitet in den Trichter 2 sind, sich gegenüberliegend, Ausnehmungen 3 eingearbeitet, welche, von oben betrachtet, gemeinsam einen Rechteckquerschnitt aufspannen. Dabei ist der Abstand B (Fig. 2) zwischen den beiden parallel zu den Stirnseiten der Zahnräder 4 und 5 und der Trichterachse A verlaufenden Seitenwänden der Ausnehmungen 3 annähernd gleich der Breite b (Fig. 2) der Zahnräder. Der Abstand L zwischen den parallel zu den Zahnradachsen C und zur Trichterachse A verlaufenden Seitenwänden der beiden vorzugsweise vorgesehenen Ausnehmungen 3 ist annähernd gleich der Summe der Zahnradaussendurchmesser dₐ minus einer Zahnhöhe h.

Anschliessend an je die rechteckigen Ausnehmungen 3, d.h. an deren den Zahnrädern zugewandten unteren Enden, schliesst eine sichelförmige Ausnehmung 6, 6' an, die die Kompressionszone für das dem Beschikkungstrichter 2 zugeführte Fördermedium, die Thermoplastschmelze bildet. Der grösste radiale Abstand vom Kopfmantelzylinder des jeweiligen Zahnrades entspricht mindestens der Zahnhöhe h. Die anschliessende Dichtungszone Z hat die Minimallänge einer Zahnteilung der Zahnräder 4 und 5 und bildet mit dem Kopfmantelzylinder des zugeordneten Zahnrades einen engen Spalt.

Bei Antrieb einer Welle 7 in Pfeilrichtung 8 dreht auch das Zahnrad 4 in derselben Drehrichtung und damit das Zahnrad 5 in einer gegenläufigen Drehrichtung 9. Dadurch wird das zu fördernde Medium in Pfeilrichtung 12 mitgenommen und tritt in die Zahnlücken der Zahnräder 4 und 5 ein, wird in der Kompressionszone verdichtet und noch vollständig in die Zahnlücken hineingedrückt. Dann tritt es durch eine Austrittsöffnung 11 aus.

Vorteilhafterweise wird der grösste Durchmesser des Beschickungstrichters 2, D1, zwischen dem 2,1 und 2,3fachen Achsabstand a der Zahnräder 4 und 5 gewählt. Der Durchmesser D2 der Austrittsöffnung 11 wird weiter vorteilhafterweise im wesentlichen als Hälfte des grössten Durchmessers D1 des Beschickungstrichters 2 gewählt.

Aus Fig. 2 ist ersichtlich, dass die Rotorwellen an den jeweiligen Zahnrädern 4 und 5 mittels Wellenlagerabschnitten 25 in Gleitlagern 18 gelagert sind und mittels Verlängerungszapfen 27 weiter nach aussen geführt sind und durch die jeweiligen Pumpendeckel 14 bzw. 15 nach aussen in die Umgebung ausmünden. Die Verlängerungszapfen 27 laufen in den Pumpendeckeln 15 bzw. 14 in Labyrinthdichtungen 17, welche gebildet sind durch schraubenförmige Nuten in den Wellenzapfen 27 und/oder in den Pumpendeckeln 15 bzw. 14.

Die bevorzugte Förderrichtung der Labyrinthdichtungen 17 ist in Fig. 2 mit dem Pfeil 19 dargestellt.

Ein kleiner Anteil (%o) der durch den Beschickungstrichter 2 zugeführten verschmutzten Thermoplastschmelze wird axial in Richtung 19 als Schmiermedium durch die Gleitlager 18 durchgepresst und anschliessend durch Förderwirkung der Labyrinthdichtungen 17 als Abfall in die Umgebung ausgegeben. Im Gehäuse 1 wie auch in den Pumpendeckeln 14 und 15 sind Kanäle 21 für ein Kühlmedium vorgesehen.

Mit dieser Pumpe lassen sich stark verschmutzte Thermoplastschmelzen oder PVC-Schmelzen ab einem im Beschickungstrichter 2 gegenüber Umgebungsdruck herrschenden Unterdruck mit für Zahnradpumpen üblichem konstantem Ausgabedruck aus der Austrittsöffnung 11 austragen.

Die vorgesehenen Gleitlager mit auswärtsliegenden Labyrinthdichtungen und Ausmündung der Wellenzapfen in die Umgebung ermöglichen es, die Lager mittels des Fördermediums zu schmieren und dabei den als Schmierstrom abgezweigten Fördermediumstrom als Abfall nach aussen auszutragen.

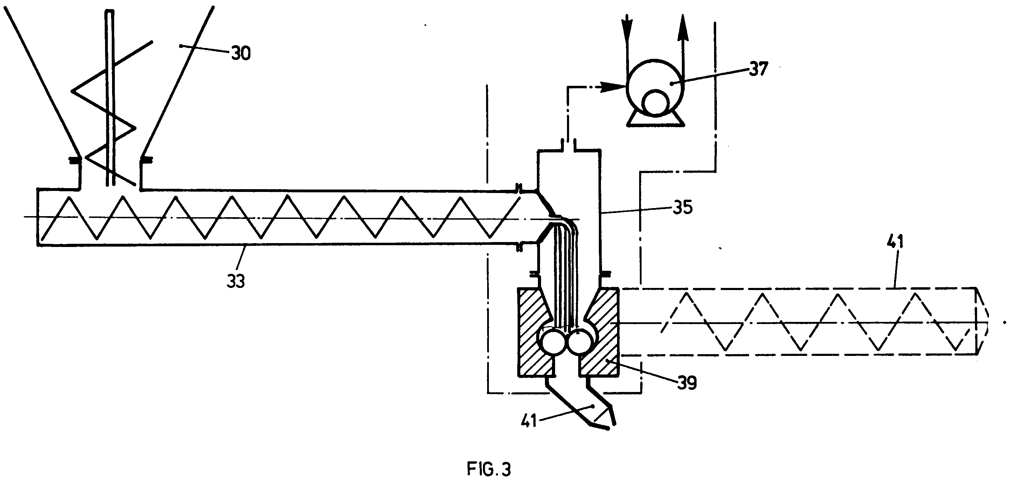

In Fig. 3 ist schematisch ein erfindungsgemässes Extrusionssystem dargestellt mit, strichpunktiert umrandet, einer erfindungsgemässen Behandlungsstufe. Das Extrusionssystem umfasst hier als Beispiel ein Stopfwerk 30 und, dem nachgeschaltet, ein beliebig aufgebauter ein- oder mehrschneckiger Extruder 33, ausmündend über eine Mehrstrangdüse 31 in den Entgasungsschacht 35 der erfindungsgemässen Behandlungsstufe. Bei Bedarf können zusätzlich dabei zwischen den Extruder 33 und den Entgasungsschacht 35 ein oder mehrere Schmelzefilter installiert sein. Die Entgasung der im Extruder 33 erzeugten, stark verschmutzten Thermoplastschmelze oder PVC-Schmelze erfolgt im Entgasungsschacht 35 mit Hilfe der Vakuumpumpe 37. Der dadurch, mit Bezug auf Umgebungsdruck, auf Unterdruck gelegte Entgasungsschacht 35 mündet in die Beschickungsöffnung einer Zahnradpumpe 39 ein, welche so ausgebildet ist, dass sie bei beschickungsseitigem Unterdruck ausgangsseitig den für Zahnradpumpen üblichen konstanten Austragsdruck liefert. Sie mündet beispielsweise in ein Extrusionswerkzeug 41 aus.

Wie ersichtlich, wird durch Vorsehen der wie spezifiziert ausgebildeten Austragszahnradpumpe 39 die verfahrenstechnische Länge des Extrusionssystems wesentlich reduziert gegenüber konventionellen Kaskadensystemen mit dem Entgasungsschacht 35 und nachgeschalteter, zweiter Extrusionsstufe 40 (wie gestrichelt angedeutet). Dabei wird durch Vorsehen der Düse 31 diese Behandlung von Kunststoffabfällen genannter Art oder von PVC-Schmelzen erst reproduzierbar und damit kommerziell möglich.

Als Austragspumpe 39 wird bevorzugterweise die Pumpe, wie sie prinzipiell anhand der Fig. 1 und 2 erläutert wurde, eingesetzt.

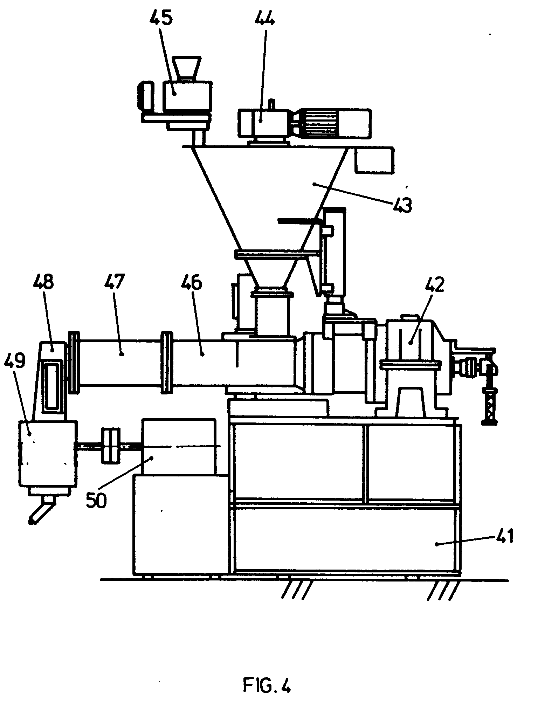

In Fig. 4 ist schematisch ein heute bevorzugtes, erfindungsgemässes Extrusionssystem mit erfindungsgemässer Behandlungsstufe und erfindungsgemässer Austragspumpe dargestellt. Es bezeichnen

41: den Maschinenrahmen; 42: das Antriebsgetriebe für den Extruder; 46, 47: Extrusionsteil mit Strangdüse, welche in den Entgasungsschacht 48 ausmündet; 49: die Austragszahnradpumpe; 43: das Stopfwerk (beispielhaft); 45: ein vorgesehener Metallausscheider; 44: den Antrieb für das Stopfwerk 43. Mit 50 ist der Antrieb für die Austragszahnradpumpe 49 dargestellt.

## Patentansprüche

1. Verfahren zur Behandlung einer Thermoplastschmelze, bei dem die Schmelze mittels Unterdruck entgast wird und danach der Austragsdruck für den Schmelzenaustrag aus einem Werkzeug mittels einer mit Unterdruck beschickbaren Zahnradpumpe aufgebaut wird, dadurch gekennzeichnet, dass als Schmelze PVC oder thermoplastische Kunststoffabfälle variierender Zusammensetzung behandelt werden, welch letztere unterschiedlich stark verschmutzt sind und die Zahnradpumpe durch mindestens einen Strang der Schmelze mit vorgegebener Geometrie gespiesen wird.

2. Verfahren, vorzugsweise nach mindestens einem der Ansprüche, wie nach Anspruch 1, dadurch gekennzeichnet, dass der Strang vor der Entgasung gebildet wird.

3. Behandlungsstufe für eine Thermoplastschmelze mit einem auf Unterdruck gesetzten Entgasungsschacht (35) und ihm nachgeschalteter, gegenüber Umgebungsdruck mit Unterdruck beschickbarer Zahnradpumpe (39) für den Aufbau des Austragsdruckes der Schmelze, dadurch gekennzeichnet, dass für die Behandlung von PVC oder von thermoplastischen Kunststoffabfällen variierender Zusammensetzung, die unterschiedlich stark verschmutzt sind, die Zahnradpumpe mittels einer Mehrstrangdüse gespiesen wird.

4. Zahnradpumpe zum Fördern eines hochviskosen Mediums, gegenüber Umgebungsdruck mit Unterdruck beschickbar, welche einen oberhalb der Zahnräder (4, 5) liegenden, sich gegen die Zahnräder hin verjüngenden Eintrittstrichter (2) aufweist, dadurch gekennzeichnet, dass zur Förderung von Thermoplastschmelzen, insbesondere von PVC oder von thermoplastischen Kunststoffabfällen variierender Zusammensetzung, die unterschiedlich stark verschmutzt sind, die Wellen (25) der Rotoren so gelagert sind, dass das Fördermedium das Schmiermedium für die Wellenlager (18) bildet und Fliesswege (17) für das Fördermedium axial entlang der Rotorwellen (27) in die Umgebung vorgesehen sind.

5. Behandlungsstufe nach Anspruch 3 mit einer Zahnradpumpe nach Anspruch 4, insbesondere für PVC oder für thermoplastische Kunststoffabfälle variierender Zusammensetzung, die unterschiedlich stark verschmutzt sind.

6. Zahnradpumpe bzw. Behandlungsstufe nach Anspruch 4 bzw. 5, dadurch gekennzeichnet, dass der Trichter mit einem zwischen 36° und 60° liegenden Kegelwinkel (α) ausgestattet ist und/oder vorzugsweise mit einer im Querschnitt rechteckigen Ausnehmung (3) versehen ist, vorzugsweise mit zwei sich gegenüberliegenden, rechteckigen Ausnehmungen (3), wobei der Abstand (B) zwischen den beiden parallel zu den Stirnseiten der Zahnräder und der Trichterachse (A) verlaufenden Seitenwänden der Ausnehmung (3) annähernd gleich der Zahnradbreite (b) ist und gegebenenfalls der Abstand (L) zwischen den parallel zu den Zahnradachsen und zur Trichterachse verlaufenden Seitenwänden der Ausnehmungen annähernd gleich der Summe der Zahnradaussendurchmesser minus einer Zahnhöhe ist.

7. Zahnradpumpe bzw. Behandlungsstufe nach einem der Ansprüche 4 bis 6, dadurch gekennzeichnet, dass der grösste Durchmesser des Trichters gleich der 2,1 bis 2,3-fachen Achsdistanz (a) der Zahnräder ist.

8. Zahnradpumpe bzw. Behandlungsstufe nach einem der Ansprüche 4 bis 7, dadurch gekennzeichnet, dass am unteren Ende der vorgesehenen Ausnehmungen (3) je eine im Querschnitt sichelförmige Kompressionspartie (6) angeformt ist, deren grösster radialer Abstand vom Kopfmantelzylinder des nächstliegenden Zahnrades mindestens gleich der Zahnhöhe (h) ist, an welcher Kompressionspartie (6) ein sich über mindestens eine Zahnteilung der Zahnräder erstreckender Abschnitt (Z) anschliesst, der mit dem Kopfmantelzylinder besagten nächstliegenden Zahnrades einen engen Spalt bildet.

9. Zahnradpumpe bzw. Behandlungsstufe nach einem der Ansprüche 4 bis 8, dadurch gekennzeichnet, dass der Durchmesser (D₂) der Austrittsöffnung kleiner als die Hälfte des grössten Durchmessers des Trichters (D₁) ist.

10. Zahnradpumpe bzw. Behandlungsstufe nach einem der Ansprüche 4 bis 9, dadurch gekennzeichnet, dass im Zahnradpumpengehäuse (1) Kanäle (21) für ein Heizmedium vorgesehen sind, vorzugsweise auch in den Pumpendeckeln (14 15).

11. Zahnradpumpe bzw. Behandlungsstufe nach einem der Ansprüche 4 bis 10, dadurch gekennzeichnet, dass die Rotorwellen zweiseitig in Gleitlagern (18) gelagert sind und die gelagerten Wellenzapfen je eine Verlängerung (27) mit Labyrinthdichtung (17) aufweisen, dabei vorzugsweise die Förderrichtung (19) der Labyrinthdichtungen von den Gleitlagern (18) nach aussen weist.

12. Zahnradpumpe bzw. Behandlungsstufe nach einem der Ansprüche 4 bis 11, dadurch gekennzeichnet, dass die Pumpenwellen (27) stirnseitig in die Umgebung ausmünden.
